# EUROPÄISCHE PATENTSCHRIFT

(11) **EP 3 722 505 B1**
(45) Veröffentlichungstag und Bekanntmachung des Hinweises auf die Patenterteilung: **03.12.2025**
(21) Anmeldenummer: 20156904.3
(22) Anmeldetag: 12.02.2020
(51) Int. Cl.: E01C 19/23, E01C 19/48, E01C 23/088

(54) **BAUMASCHINE UND VERFAHREN ZUM STEUERN EINER BAUMASCHINE**
CONSTRUCTION MACHINE AND METHOD FOR CONTROLLING A CONSTRUCTION MACHINE
ENGIN DE CONSTRUCTION ET PROCÉDÉ DE COMMANDE D'UN ENGIN DE CONSTRUCTION

(30) Priorität: 12.04.2019 DE 102019109773
(43) Veröffentlichungstag der Anmeldung: 14.10.2020
(73) Patentinhaber: Wirtgen GmbH, 53578 Windhagen (DE)
(72) Erfinder: Frank, Burkhard, 53560 Vettelschoß (DE)
(74) Vertreter: Oppermann, Frank

(56) Entgegenhaltungen:
- EP-A1- 2 270 339
- EP-B1- 2 694 747
- WO-A1-2011/068441
- DE-A1- 102007 058 534
- DE-A1- 2 435 602
- DE-T5- 112011 101 827

## Beschreibung

Die Erfindung betrifft eine Baumaschine, insbesondere Straßenfräsmaschine, Stabilisierer, Recycler oder Surface-Miner, die einen Maschinenrahmen aufweist, der von einem Fahrwerk getragen wird.

Die bekannten selbstfahrenden Baumaschinen verfügen im Allgemeinen über einen Maschinenrahmen, der von einem Fahrwerk getragen wird, das mehrere Laufwerke aufweist, die Ketten, Räder oder Bandagen aufweisen können. Es sind selbstfahrende Baumaschinen bekannt, die eine Arbeitseinrichtung zur Bearbeitung des Bodens, beispielsweise zum Abtragen schadhafter Straßenschichten (Straßenfräsmaschine), zur Vorbereitung des Bodens für den Straßenbau oder Wiederaufbereitung bestehender Straßenbeläge (Stabilisierer, Recycler) oder zum Abbau von Bodenschätzen (Surface-Miner) aufweisen. Den einzelnen Laufwerken der Baumaschine sind im Allgemeinen Hubeinrichtungen zugeordnet, die Kolben-/Zylinder-Anordnungen umfassen, um den Maschinenrahmen zusammen mit der Arbeitseinrichtung gegenüber der Bodenoberfläche absenken und anheben zu können. Die Antriebleistung für sämtliche Aggregate der Baumaschine wird im Allgemeinen mit einem Verbrennungsmotor zur Verfügung gestellt, der ein Kühlsystem aufweist, das einen Kühler und einen Lüfter umfasst, der von einem Lüftermotor angetrieben wird. Beispiele für Baumaschinen sind auch die bekannten Gleitschalungsfertiger, Straßenfertiger, Walzen, Brecher, Grader, Lader, Kräne etc.

Die bekannten Baumaschinen verfügen über eine Mehrzahl von Hydrauliksystemen, die hydraulische Komponenten umfassen, die bestimmte Funktionen ausüben können. Zu diesen Komponenten zählen beispielsweise die Kolben-/Zylinder-Anordnungen zur Betätigung der Hubeinrichtungen sowie der Lüftermotor zum Antrieb des Lüfters des Kühlsystems. Die hydraulischen Komponenten werden von Hydraulikpumpen mit Hydraulikflüssigkeit versorgt, wobei die Hydraulikpumpen von dem Verbrennungsmotor angetrieben werden. Für die Bedienung der Baumaschine sind Bedienelemente vorgesehen, mit denen der Maschinenführer Einfluss auf die hydraulischen Komponenten nehmen kann.

Die einzelnen hydraulischen Komponenten der Baumaschine haben in Abhängigkeit von der jeweiligen Funktion einen unterschiedlichen Leistungsbedarf. Daher sind die den hydraulischen Komponenten zugeordneten Hydraulikpumpen entsprechend dimensioniert. Die Hydraulikpumpen müssen den hydraulischen Komponenten einen bestimmten Volumenstrom von Hydraulikflüssigkeit bei einem bestimmten Hydraulikdruck zur Verfügung stellen können. Zur Verringerung des technischen Aufwandes und der damit verbundenen Herstellungskosten wird grundsätzlich eine möglichst kleine Dimensionierung der Hydraulikpumpen angestrebt.

Die Hydraulikpumpen sind bei den bekannten Baumaschinen in der Regel ausreichend dimensioniert, um ihre Funktion ausüben zu können. In der Praxis hat sich jedoch gezeigt, dass einzelne Hydraulikpumpen den zugeordneten hydraulischen Komponenten unter bestimmten Betriebsbedingungen einen ausreichenden Volumenstrom an Hydraulikflüssigkeit nicht in kurzer Zeit zur Verfügung stellen können. Die ordnungsgemäße Funktion der hydraulischen Komponenten kann zwar sichergestellt werden, aber das dynamische Verhalten der Komponenten könnte verbessert werden. Zu diesen hydraulischen Komponenten zählen insbesondere die Kolben-/Zylinderanordnungen der Hubeinrichtungen zur Höhenverstellung des Maschinenrahmens, deren Verfahrgeschwindigkeit vergrößert werden könnte, so dass die Hubeinrichtungen schneller ein- bzw. ausgefahren werden könnten. Es ist beispielsweise aus den Dokumenten DE 11 2011 101 827 T5 oder EP2 270 339 A1 grundsätzlich bekannt, die Hydraulikflüssigkeit eines ersten Hydrauliksystems bedarfsweise einem zweiten Hydrauliksystem zur Verfügung zu stellen.

Der Erfindung liegt die Aufgabe zugrunde, die Funktion einzelner hydraulischer Komponenten einer Baumaschine mit einem nur verhältnismäßig geringen technischen Aufwand zu verbessern, insbesondere das dynamische Verhalten der betreffenden hydraulischen Komponente zu verbessern.

Die Lösung dieser Aufgabe erfolgt erfindungsgemäß mit den Merkmalen des unabhängigen Patentanspruchs 1. Die abhängigen Ansprüche betreffen bevorzugte Ausführungsformen der Erfindung.

Die erfindungsgemäße Baumaschine verfügt über einen von einem Fahrwerk getragenen Maschinenrahmen und eine Mehrzahl von Hydrauliksystemen, die jeweils mindestens eine hydraulische Komponente, mindestens eine Hydraulikpumpe zum Fördern von Hydraulikflüssigkeit für die mindestens eine hydraulische Komponente und mindestens eine Hydraulikleitung zum Transport der Hydraulikflüssigkeit von der mindestens einen Hydraulikpumpe zu der mindestens einen hydraulischen Komponente aufweisen. In diesem Zusammenhang werden unter einer Mehrzahl von Hydrauliksystemen mindestens zwei Hydrauliksysteme verstanden.

In der Praxis wird ein Hydrauliksystem nur eine Hydraulikpumpe umfassen. In der Praxis treibt die eine Hydraulikpumpe eine oder mehrere hydraulische Komponenten an. Ein Hydrauliksystem mit einer oder mehreren hydraulischen Komponenten kann aber grundsätzlich auch mehrere Hydraulikpumpen umfassen.

Die Antriebseinrichtung der Baumaschine umfasst mindestens einen Verbrennungsmotor. Zur Übertragung der Antriebsleistung von der Antriebseinrichtung auf die Mehrzahl von Hydraulikpumpen ist eine Kraftübertragungseinrichtung vorgesehen.

Die erfindungsgemäße Baumaschine zeichnet sich durch eine hydraulische Steuereinrichtung aus, die zwei Hydrauliksystemen der Mehrzahl von Hydrauliksystemen zugeordnet ist. Die hydraulische Steuereinrichtung ist derart ausgebildet, dass zumindest ein Teil der von der mindestens einen Hydraulikpumpe des ersten Hydrauliksystems geförderten Hydraulikflüssigkeit dem zweiten Hydrauliksystem zuführbar ist, so dass die mindestens eine hydraulische Komponente des zweiten Hydrauliksystems mit zumindest einem Teil der von der mindestens einen Hydraulikpumpe des ersten Hydrauliksystems geförderten Hydraulikflüssigkeit und der von der mindestens einen Hydraulikpumpe des zweiten Hydrauliksystems geförderten Hydraulikflüssigkeit betrieben wird.

Das Grundprinzip der Erfindung liegt darin, zumindest ein Teil des von der Hydraulikpumpe der einen hydraulischen Komponente zur Verfügung gestellten Volumens von Hydraulikflüssigkeit unter bestimmten Betriebsbedingungen zusätzlich der anderen hydraulischen Komponente zur Verfügung zu stellen. Die beiden

Hydraulikpumpen können die gleiche oder eine unterschiedliche Dimensionierung haben.

Wenn beide Hydraulikpumpen die gleiche Dimensionierung haben und das gesamte Volumen von Hydraulikflüssigkeit, das von der einen Hydraulikpumpe geliefert wird, zusätzlich der anderen hydraulischen Komponente zugeführt wird, kann der Volumenstrom verdoppelt werden. Folglich steht ein für einen schnellen Betrieb der jeweiligen Komponente ausreichendes Volumen von Hydraulikflüssigkeit zur Verfügung. Für die Erfindung ist allein entscheidend, dass ein Teil des Volumens aus dem einem Hydrauliksystem abgezogen und dem anderen Hydrauliksystem zugeführt werden kann. Dies sollte aber nur unter besonderen Betriebsbedingungen der Fall sein, um das Ansprechverhalten der betreffenden hydraulischen Komponente zu verbessern bzw. deren Verfahrgeschwindigkeit zu vergrößern. Die besonderen Betriebsbedingungen sind Betriebszustände der mindestens einen hydraulischen Komponente des zweiten Hydrauliksystem, in denen eine Unterversorgung mit Hydraulikflüssigkeit gegeben oder zu befürchten ist. Diese kritischen Betriebszustände können mit geeigneten Sensoren erkannt werden. Wenn von der Hydraulikpumpe des zweiten Hydrauliksystems mehrere hydraulischen Komponenten betrieben werden, kann als kritischer Betriebszustand der Zustand angenommen werden, in dem sämtliche hydraulischen Komponenten oder eine bestimmte Anzahl von hydraulischen Komponenten gleichzeitig betrieben werden. Wenn in diesem Zusammenhang von einem ersten und einem zweiten Hydrauliksystem die Rede ist, dient dies nur der Unterscheidung zwischen verschiedenen Hydrauliksystemen. Folglich wird darunter nicht verstanden, dass nur zwei Hydrauliksysteme vorgesehen sein können. Vielmehr kann überschüssige Hydraulikflüssigkeit auch aus mehreren Hydrauliksystemen einem anderen Hydrauliksystem zugeführt werden oder überschüssige Hydraulikflüssigkeit aus einem Hydrauliksystem mehreren anderen Hydrauliksystemen zugeführt werden oder Hydraulikflüssigkeit aus mehreren Hydrauliksystemen mehreren anderen Hydrauliksystemen zugeführt werden.

Die Erfindung sieht ein hydraulisches Steuerelement zur Steuerung des Volumenstroms der zu der mindestens einen hydraulischen Komponente des ersten Hydrauliksystems strömenden Hydraulikflüssigkeit oder Unterbrechung der Flüssigkeitsströmung vor. Dieses hydraulische Steuerelement wirkt mit der hydraulischen Steuereinrichtung derart zusammen, dass bei einer Verringerung des Volumenstroms der Hydraulikflüssigkeit, die der mindestens einen hydraulischen Komponente des ersten Hydrauliksystems zugeführt wird, oder einer Unterbrechung der Flüssigkeitsströmung die hydraulische Steuereinrichtung derart angesteuert wird, dass das Volumen an Hydraulikflüssigkeit, die der mindestens einen hydraulischen Komponente des ersten Hydrauliksystems nicht zugeführt wird, der mindestens einen hydraulischen Komponente des zweiten Hydrauliksystems zugeführt wird. Die Verringerung des Volumenstroms in dem einen Hydrauliksystem führt somit automatisch zu einer entsprechenden Erhöhung des Volumenstroms in dem anderen Hydrauliksystem.

Gemäß der Erfindung umfasst das erste Hydrauliksystem eine Hydraulikpumpe, die einen Sauganschluss und einen Druckanschluss aufweist, wobei an dem Sauganschluss eine zu einem Tank führende Saugleitung angeschlossen ist und an dem Druckanschluss eine zu einem Einlass der hydraulischen Steuereinrichtung führende Druckleitung angeschlossen ist. Die hydraulische Steuereinrichtung weist einen ersten Auslass und einen zweiten Auslass auf, wobei an den ersten Auslass eine zu der mindestens einen hydraulischen Komponente des ersten Hydrauliksystems führende Druckleitung angeschlossen ist, in die das hydraulische Steuerelement geschaltet ist, und an den zweiten Auslass eine zu dem zweiten Hydrauliksystem führende Druckleitung angeschlossen ist, so dass dem zweiten Hydrauliksystem Hydraulikflüssigkeit aus dem ersten Hydrauliksystem zugeführt werden kann. In der zu dem zweiten Hydrauliksystem führenden Verbindungsleitung ist vorzugsweise ein Rückschlagventil angeordnet, so dass ein Rückstrom von Hydraulikflüssigkeit aus dem zweiten in das erste Hydrauliksystem verhindert wird.

Die hydraulische Steuereinrichtung ist als ein mit Hydraulikflüssigkeit steuerbares Proportionalwegeventil ausgebildet, das einen ersten und einen zweiten Steueranschluss hat, wobei an den ersten Steueranschluss eine erste Steuerleitung angeschlossen ist, die an der zu der mindestens einen hydraulischen Komponente des ersten Hydrauliksystems führenden Druckleitung stromab der hydraulischen Steuereinrichtung und stromauf des hydraulischen Steuerelements angeschlossen ist, und an den zweiten Steueranschluss eine zweite Steuerleitung angeschlossen ist, die an der zu der mindestens einen hydraulischen Komponente des ersten Hydrauliksystems führenden Druckleitung stromab des hydraulischen Steuerelements angeschlossen ist. Folglich wird das Proportionalwegeventil in Abhängigkeit von dem Differenzdruck gesteuert. Diese Ausführungsform gewährleistet eine sichere Funktion bei einem verhältnismäßig geringen technischen Aufwand. Es ist aber grundsätzlich auch möglich, anstelle eines mediumgesteuerten Wegeventils ein elektromagnetisch betätigbares Wegeventil vorzusehen, wobei der Druck stromauf und stromab des hydraulischen Steuerelements mit Druckmessern gemessen werden, deren Drucksignale mit einer Steuereinheit ausgewertet werden, die Steuersignale für das elektromagnetisch betätigbare Wegeventil erzeugt.

Das Proportionalwegeventil kann federnd in eine Stellung vorgespannt sein, in der eine Strömungsverbindung zwischen dem Einlass und dem ersten Auslass hergestellt ist, so dass das Wegeventil einen definierten Betriebszustand auch dann einnimmt, wenn die Steuerleitungen drucklos sein sollten.

Das hydraulische Steuerelement in dem ersten Hydrauliksystem kann als ein elektromagnetisch gesteuertes Proportionalventil oder ein Absperrventil ausgebildet sein. Das Ventil kann aber auch ein direkt gesteuertes Proportionalventil sein. Die Auswahl eines direkt gesteuerten oder eines hydraulisch oder pneumatisch vorgesteuerten Steuerventils kann von den zu erwarteten Volumenströmen abhängen.

Eine weitere bevorzugte Ausführungsform sieht vor, dass die Baumaschine eine Steuereinheit aufweist, die zur Ansteuerung des hydraulischen Steuerelements konfiguriert ist. Eine derartige Steuereinheit kann eine separate Einheit bilden oder Bestandteil der zentralen Steuereinheit sein, die in den bekannten Baumaschinen ohnehin vorhanden ist. Die Steuereinheit ist derart konfiguriert, dass ein Boost-Betriebsmodus für die Baumaschine vorgesehen ist, in dem das Steuerelement derart angesteuert wird, dass der Volumenstrom der zu der mindestens einen hydraulischen Komponente des ersten Hydrauliksystems strömenden Hydraulikflüssigkeit verringert oder die Flüssigkeitsströmung unterbrochen wird. Die Steuereinheit kann derart konfiguriert sein, dass in den Boost-Betriebsmodus automatisch geschaltet wird, wenn die mindestens eine hydraulische Komponente des zweiten Hydrauliksystems betrieben wird. Eine alternative Ausführungsform sieht ein Bedienelement zum Einschalten des Boost-Betriebsmodus vor, wobei die Steuereinheit derart konfiguriert ist, dass in den Boost-Betriebsmodus geschaltet wird, wenn das Bedienelement betätigt wird.

Das Einschalten der betreffenden hydraulischen Komponente oder Komponenten führt somit bei bestimmten Betriebsbedingungen automatisch zu einer Erhöhung des Volumenstroms in dem zweiten Hydrauliksystem. Die Erhöhung des Volumenstroms muss aber nicht von der Betätigung eines Bedienelements durch den Maschinenführer abhängig sein. Es ist auch möglich, dass die Steuereinheit in einem bestimmten Betriebszustand, der beispielsweise von einem oder mehreren Sensoren erkannt werden kann, den Volumenstrom in dem zweiten Hydrauliksystem automatisch erhöht.

Die Erfindung sieht vor, dass die hydraulische Komponente die Hydraulikpumpe der Baumaschine ist, die den Lüfter des Kühlers des Kühlsystems des Verbrennungsmotors der Baumaschine antreibt. Der Hydraulikantrieb des Lüfters hat sich als eine hydraulische Komponente erwiesen, deren Drehzahl für einen vorgegebenen relativ kurzen Zeitraum verringert werden kann oder welche angehalten werden kann, ohne die Funktion des Kühlsystems wesentlich zu beeinträchtigen. Folglich kann das Hydrauliksystem des Kühlsystems überschüssige Hydraulikflüssigkeit für das andere Hydrauliksystem bereitstellen.

In der Praxis hat sich gezeigt, dass bei Baumaschinen, beispielsweise Straßenfräsmaschinen, Stabilisierer, Recycler, Surface-Miner, die den Hubeinrichtungen zur Höhenverstellung des Maschinenrahmens zugeordneten Kolben-Zylinder-Anordnungen beim Umsetzen der Baumaschine nur relativ langsam ausgefahren werden können. Beim Umsetzen der Maschine werden im Allgemeinen sämtliche Kolben-Zylinder-Anordnungen gleichzeitig ausgefahren. Zu diesem Zeitpunkt ist die Arbeitseinrichtung der Baumaschine, beispielsweise die Fräswalze einer Straßenfräsmaschine außer Betrieb. Auf eine hohe Lüfterdrehzahl kann beim Umsetzen der Maschine kurzzeitig verzichtet werden. Erfindungsgemäß ist daher vorgesehen, dass in dem Betriebszustand des Umsetzens der Maschine zumindest ein Teil des Volumens von Hydraulikflüssigkeit des Hydrauliksystems, in dem sich der Hydraulikmotor des Lüfters befindet, dem Hydrauliksystem zugeführt wird, in dem sich die Kolben-Zylinder-Anordnungen der Hubeinrichtungen befinden. Infolge des Überschusses an Hydraulikflüssigkeit können diese Kolben-Zylinder-Anordnungen somit schnell ausgefahren und der Vorgang des Umsetzens der Maschine schnell beendet werden.

Im Folgenden werden zwei Ausführungsbeispiele der Erfindung unter Bezugnahme auf die Figuren im Einzelnen erläutert.

Es zeigen:
- Fig. 1: ein Ausführungsbeispiel einer selbstfahrenden Baumaschine in der Seitenansicht,
- Fig. 2: die Baumaschine von Fig. 1 in der Draufsicht,
- Fig. 3: zwei Hydrauliksysteme der Baumaschine und
- Fig. 4: ein weiteres Ausführungsbeispiel des hydraulischen Steuerelements und der hydraulischen Steuereinrichtung eines Hydrauliksystems der Baumaschine.

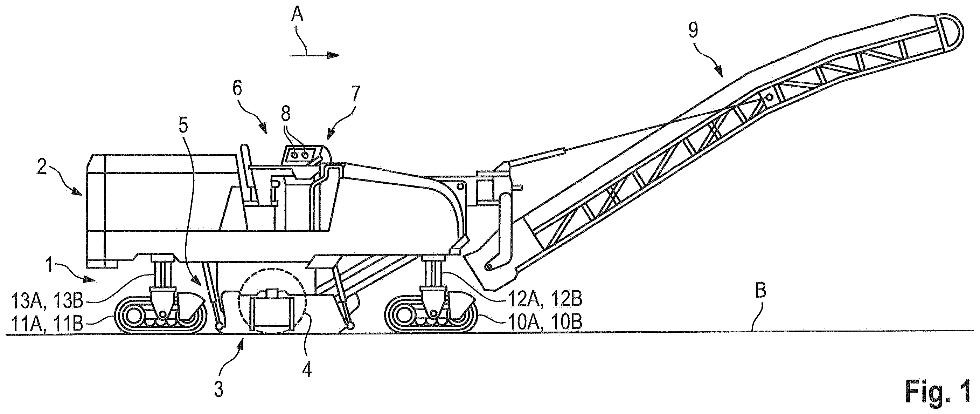

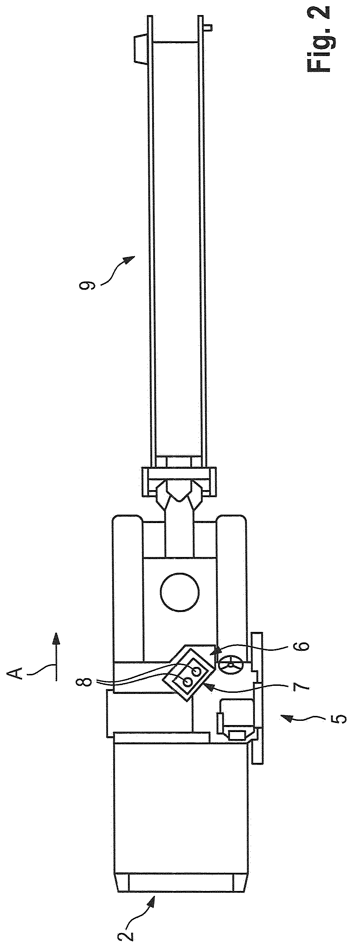

Die Figuren 1 und 2 zeigen in der Seiten- und Draufsicht als Beispiel für eine Baumaschine eine selbstfahrende Straßenfräsmaschine zum Abfräsen von Straßenbelägen, bei der es sich um eine Frontlader-Straßenfräsmaschine handelt. Die Baumaschine verfügt über einen von einem Fahrwerk 1 getragenen Maschinenrahmen 2, an dem eine Arbeitseinrichtung 3 angeordnet ist, mit der die für die Baumaßnahme erforderlichen Arbeiten durchgeführt werden können. Die Arbeitseinrichtung 3 weist eine in Fig. 1 nur andeutungsweise dargestellte Fräswalze 4 auf, die in einem Fräswalzengehäuse 5 angeordnet ist. Oberhalb des Fräswalzengehäuses 5 befindet sich am Maschinenrahmen der Fahrstand 6 mit einem Bedienpult 7 für den Maschinenführer. Das Bedienpult 7 weist mehrere Bedienelemente 8 auf, die der Maschinenführer betätigen kann. Das abgefräste Material wird mit einer Fördereinrichtung 9 abgeführt, die schwenkbar an der Vorderseite des Maschinenrahmens 2 angeordnet ist.

Die Baumaschine weist in Arbeitsrichtung A ein vorderes linkes Laufwerk 10A und ein vorderes rechtes Laufwerk 10B und ein hinteres linkes Laufwerk 11A und ein hinteres rechtes Laufwerk 11B auf, denen eine in Arbeitsrichtung A vordere, linke und rechte Hubeinrichtung 12A, 12B und eine hintere, linke und rechte Hubeinrichtung 13A, 13B zugeordnet sind, so dass durch Einfahren bzw. Ausfahren der Hubeinrichtungen die Höhe und Neigung des Maschinenrahmens 2 gegenüber der Bodenoberfläche B verändert werden kann.

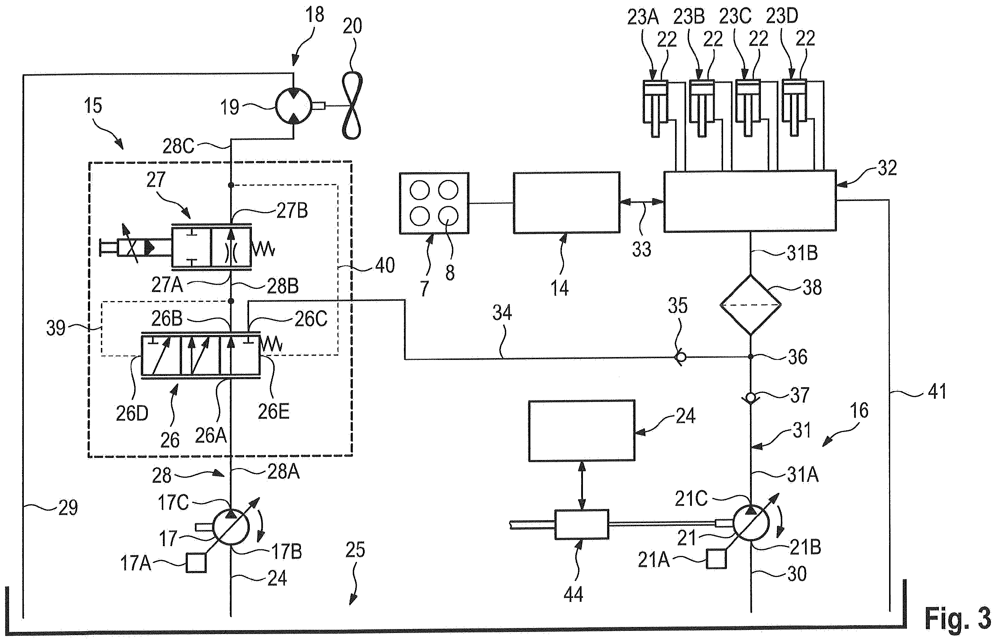

Die Antriebsleistung für den Fahrantrieb und die Arbeitseinrichtung sowie sonstige Aggregate der Baumaschine werden von einem in den Figuren 1 und 2 nicht dargestellten Verbrennungsmotor bereitgestellt, der in Fig. 3 gezeigt ist, in der die für die Erfindung wesentlichen Baugruppen der Baumaschine schematisch dargestellt sind. Der Verbrennungsmotor 24 verfügt über ein Kühlsystem, das einen Kühler und einen Lüfter 20 aufweist. Der Lüfter 20 wird von einem Hydraulikmotor 19 angetrieben. Die Hubeinrichtungen 12A, 12B, 13A, 13B zur Höhenverstellung des Maschinerahmens 2 werden jeweils von einer Kolben-/Zylinder-Anordnung 23A, 23B, 23C, 23D betätigt. Der Hydraulikmotor 19 des Lüfters und die den Hubeinrichtungen zugeordneten Kolben-/Zylinder-Anordnungen 23A, 23B, 23C, 23D stellen Beispiele für Komponenten dar, die als hydraulische Komponenten der Baumaschine bezeichnet werden.

Neben dem Hydraulikmotor 19 für den Lüfter und den Kolben-/Zylinder-Anordnungen der Hubeinrichtungen verfügt die Baumaschine im Allgemeinen über weitere hydraulische Komponenten. Eine Straßenfräsmaschine weist beispielsweise eine Kolben-/Zylinderanordnung zum Anheben bzw. Absenken eines Kantenschutzes, eines Niederhalters oder eines Abstreifers auf oder eine Baumaschine weist beispielsweise einen Hydraulikmotor für eine Klimaanlage zur Klimatisierung einer Fahrerkabine auf. Die einzelnen hydraulischen Komponenten werden von Hydraulikpumpen mit Hydraulikflüssigkeit versorgt. Die Hydraulikpumpen werden von dem Verbrennungsmotor angetrieben. Zur Übertragung zumindest eines Teils der Antriebsleistung des Verbrennungsmotors auf die Hydraulikpumpen ist eine Kraftübertragungseinrichtung vorgesehen, die ein Pumpenverteilergetriebe aufweisen kann.

Darüber hinaus verfügt die Baumaschine über eine zentrale Steuereinheit 14 sowie ein Bedienpult 7 mit Bedienelementen 8, beispielsweise Schalter oder Taster oder graphische Darstellungen auf einem berührungsempfindlichen Bildschirm (Touch-Screen).

Die zentrale Steuereinheit 14 kann analoge oder digitale Schaltkreise umfassen. Sie kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen. Auf den Hardware-Komponenten kann ein Datenverarbeitungsprogramm (Software) laufen, um die einzelnen Komponenten der Baumaschine ansteuern zu können.

Die Baumaschine verfügt über verschiedene Hydrauliksysteme. In Fig. 3 sind nur zwei Hydrauliksysteme 15 und 16 der Mehrzahl von Hydrauliksystemen der Baumaschine dargestellt. Beide Hydrauliksysteme 15, 16 sind offene Systeme. Die Erfindung ließe sich aber auch an geschlossenen Hydrauliksystemen verwirklichen. Dabei ist aber darauf zu achten, dass die dem jeweiligen Hydraulikkreis zusätzlich zugeführte Ölmenge nach dem Verbraucher wieder aus dem Hydraulikreis abgeführt wird. Dies könnte beispielsweise über ein Spülventil erfolgen.

Bei dem vorliegenden Ausführungsbeispiel umfasst das erste Hydrauliksystem 15 eine Hydraulikpumpe 17 zur Versorgung des Hydraulikmotors 19 zum Antrieb des Lüfters des Kühlsystems des Verbrennungsmotors 24 mit Hydraulikflüssigkeit, und den Lüfter 20. Das zweite Hydrauliksystem 16 umfasst eine Hydraulikpumpe 21 zur Versorgung der den Hubeinrichtungen 12A, 12B und 13A, 13B zugeordneten Kolben-/Zylinder-Anordnungen 23A, 23B, 23C, 23D mit Hydraulikflüssigkeit. Die Hydraulikpumpen 17, 21 des ersten und zweiten Hydrauliksystems 15, 16 können Pumpen sein, die den gleichen Volumenstrom an Hydraulikflüssigkeit mit dem gleichen Druck liefern können, beispielsweise 300 l/min bei 240 bar. Die beiden Hydrauliksysteme 15, 16 können aber auch andere hydraulische Komponenten umfassen. In Fig. 3 sind auch der Verbrennungsmotor 24 der Baumaschine sowie die Kraftübertragungseinrichtung 44, beispielsweise ein mit dem Verbrennungsmotor verbundenes Pumpenverteilergetriebe, an dem die Hydraulikpumpen 17, 21 angeschlossen sind, schematisch dargestellt.

Die Hydraulikpumpe 17 des ersten Hydrauliksystems 15 ist bei dem vorliegenden Ausführungsbeispiel eine Verstellerpumpe mit einem elektromagnetisch gesteuerten proportionalen Druckregelventil 17A, das von der zentralen Steuereinheit 14 angesteuert wird, so dass der Volumenstrom der Pumpe 17 gesteuert werden kann. An dem Sauganschluss 17B der Hydraulikpumpe 17 ist eine Saugleitung 24 angeschlossen, die zu einem Tank 25 führt, so dass die Hydraulikpumpe 17 aus dem Tank 25 Hydraulikflüssigkeit ansaugen kann.

Das erste Hydrauliksystem 15 umfasst neben der Hydraulikpumpe 17 und dem Hydraulikmotor 19 des Lüfters 20 eine hydraulische Steuereinrichtung 26 und ein hydraulisches Steuerelement 27. Die hydraulische Steuereinrichtung 26 kann ein Prioritätsventil sein, das dafür sorgt, dass der geforderte Volumenstrom zur hydraulischen Komponente 18 Vorrang hat.

Bei dem vorliegenden Ausführungsbeispiel ist die hydraulische Steuereinrichtung 26 ein mit Hydraulikflüssigkeit gesteuertes Proportionalwegeventil, das einen Einlass 26A und einen ersten Auslass 26B und einen zweiten Auslass 26C sowie einen ersten Steueranschluss 26D und einen zweiten Steueranschluss 26E aufweist. Das Proportionalwegeventil ist in eine Stellung federnd vorgespannt, in der eine Fluidverbindung zwischen dem Einlass 26A und dem ersten Auslass 26B hergestellt ist. Wenn der Verschlusskörper des Ventils entgegen der Federspannung verschoben wird, strömt ein Teil oder das gesamte Volumen von Hydraulikflüssigkeit zu dem zweiten Auslass 26C.

Das hydraulische Steuerelement 27 ist ein elektromagnetisch gesteuertes Proportionalventil, das von der zentralen Steuereinheit 14 angesteuert wird. Das hydraulische Steuerelement 27 weist einen Einlass 27A und einen Auslass 27B auf. Der Durchfluss von Hydraulikflüssigkeit von dem Einlass 27A zu dem Auslass 27B ist von der Stellung des Verschlusskörpers des Ventils abhängig.

Ein erster Leitungsabschnitt 28A einer Druckleitung 28 verbindet den Druckanschluss 17C der Hydraulikpumpe 17 mit dem Einlass 26A der hydraulischen Steuereinrichtung 26 und ein zweiter Leitungsabschnitt 28B der Druckleitung 28 verbindet den ersten Auslass 26B der Steuereinrichtung 26 mit dem Einlass 27A des hydraulischen Steuerelements 27. Der Auslass 27B des Steuerelements 27 ist über einen dritten Leitungsabschnitt 28C der Druckleitung 28 mit dem einen Anschluss des Hydraulikmotors 19 verbunden, während der andere Anschluss des Hydraulikmotors 19 über eine Rückflussleitung 29 mit dem Tank 25 verbunden ist.

Eine erste Steuerleitung 39 für Hydraulikflüssigkeit zweigt von dem zweiten Leitungsabschnitt 28B der Druckleitung 28 stromauf des Steuerelements 27 ab und führt zu dem ersten Steueranschluss 26D der Steuereinrichtung 26, und eine zweite Steuerleitung 40 für Hydraulikflüssigkeit zweigt von dem dritten Leitungsabschnitt 28C der Druckleitung 28 stromab des Steuerelements 27 ab und führt zu dem zweiten Steueranschluss 26E der Steuereinrichtung 26.

Wenn die zentrale Steuereinheit 14 ein Steuersignal zum teilweisen Schließen bzw. vollständigen Absperren des Steuerelements 27 sendet, erhöht sich der Druck in dem zweiten Leitungsabschnitt 28B der Druckleitung 28 stromauf des Steuerelements 27 und es verringert sich der Druck in dem dritten Leitungsabschnitt 28C der Druckleitung 28 stromab des Steuerelements 27, so dass der Verschlusskörper der Steuereinrichtung 26 in Abhängigkeit von der Druckdifferenz, d. h. der Stellung des Verschlusskörpers des Ventils, entgegen der Federkraft verschoben wird. Dadurch wird zumindest ein Teil des Volumens der Hydraulikflüssigkeit zu dem zweiten Auslass 26C der Steuereinrichtung 26 umgeleitet.

Das Leitungssystem des zweiten Hydrauliksystems 16 umfasst eine Saugleitung 30, die an den Sauganschluss 21B der Hydraulikpumpe 21 des zweiten Hydrauliksystems 16 angeschlossen ist und zu dem Tank 25 führt. Die Hydraulikpumpe 21 weist einen hydraulischen Druckregler 21A auf, so dass der Druck im zweiten Hydrauliksystem 16 konstant gehalten wird. Eine Druckleitung 31 verbindet den Auslass 21C der Hydraulikpumpe 21 mit einer nur schematisch dargestellten zweiten hydraulischen Steuereinrichtung 32 zum Steuern des Zu- bzw. Abflusses von Hydraulikflüssigkeit in die Zylinderräume der Kolben-/Zylinder-Anordnungen 23A, 23B, 23C, 23D der Hubeinrichtungen12A, 12B, 13A, 13B. Die zweite hydraulischen Steuereinrichtung 32 empfängt von der zentralen Steuereinheit 14 über eine Steuerleitung 33 Steuersignale. Die zweite Steuereinrichtung 32 steuert den Fluss von Hydraulikflüssigkeit in Abhängigkeit von den Steuersignalen derart, dass den Kolben-/Zylinder-Anordnungen 23A, 23B, 23C, 23D Hydraulikflüssigkeit zum Ausfahren bzw. Einfahren der Kolben zu- bzw. abgeführt wird. Zum Anheben des Maschinenrahmens 2 der Baumaschine wird Hydraulikflüssigkeit in die betreffenden Zylinderräume sämtlicher Kolben-/Zylinder-Anordnungen 23A, 23B, 23C, 23D geleitet. Aus den anderen Zylinderräumen fließt die Hydraulikflüssigkeit über eine Rückflussleitung 41 in den Tank 25.

Der zweite Auslass 26C der hydraulischen Steuereinrichtung 26 des ersten Hydrauliksystems 15 ist mit dem zweiten Hydrauliksystem 16 über eine Verbindungsleitung 34 verbunden, in der ein erstes Rückschlagventil 35 angeordnet ist. In dem Leitungsabschnitt 31A der Druckleitung 31 des zweiten Hydrauliksystems 16 stromauf des Anschlusspunktes 36 der Verbindungsleitung 34 befindet sich ein zweites Rückschlagventil 37. Das erste Rückschlagventil 35 verhindert einen Rückfluss von Hydraulikflüssigkeit aus dem zweiten Hydrauliksystem 16 in das erste Hydrauliksystem 15 und das zweite Rückschlagventil 37 verhindert einen Rückfluss von Hydraulikflüssigkeit in die Hydraulikpumpe 21 des zweiten Hydrauliksystems 16. Die Rückschlagventile 35, 37 sorgen also für eine zusätzliche Absicherung gegen einen unerwünschten Volumenstrom von dem einem zu dem anderen System. Die Rückschlagventile sind aber nicht zwingend erforderlich. In dem Leitungsabschnitt 31B der Druckleitung 31 des zweiten Hydrauliksystems 16 stromab des Anschlusspunktes 36 der Verbindungsleitung 34 ist ein Filter 38 angeordnet.

Wenn die zentrale Steuereinheit 14 ein Steuersignal zum teilweisen Schließen bzw. Absperren des Steuerelements 27 sendet, erhöht sich der Druck in dem zweiten Leitungsabschnitt 28B der Druckleitung 28 stromauf des Steuerelements 27 und verringert sich der Druck in dem dritten Leitungsabschnitt 28C der Druckleitung 28 stromab des Steuerelements 27. In Abhängigkeit von der Druckdifferenz wird somit zumindest ein Teil der Hydraulikflüssigkeit in das zweite Hydrauliksystem 16 umgeleitet.

Eine Straßenfräsmaschine oder ein Surface Miner beispielsweise können das Gelände in aufeinanderfolgenden Arbeitsabschnitten bearbeiten. Zwischen den Arbeitsabschnitten muss die Maschine dann umgesetzt werden. Während des Umsetzens ist die Arbeitseinrichtung der Baumaschine nicht im Betrieb.

Die zentrale Steuereinheit 14 sieht einen besonderen Betriebsmodus vor, in dem zusätzliche Hydraulikflüssigkeit den Kolben-/Zylinder-Anordnungen 23A, 23B, 23C, 23D der Hubeinrichtungen 12A, 12B, 13A, 13B zur Verfügung gestellt werden kann. Dieser Betriebsmodus, der als Boost-Betriebsmodus bezeichnet wird, kann beispielsweise dann aktiviert werden oder wird dann automatisch aktiviert, wenn die Kolben-/Zylinder-Anordnungen 23A, 23B, 23C, 23D möglichst schnell ausgefahren werden sollen. Dies ist beispielsweise dann der Fall, wenn die Baumaschine umgesetzt werden soll.

In dem Boost-Betriebsmodus steuert die Steuereinheit 14 das Steuerelement 27 in dem ersten Hydrauliksystem 15 derart an, dass die Zufuhr von Hydraulikflüssigkeit zu dem Hydraulikmotor 19 des Lüfters 20 zumindest teilweise unterbrochen wird. Zu diesem Zeitpunkt steuert die Steuereinheit 14 das Druckregelventil 17A der Hydraulikpumpe 17 des ersten Hydrauliksystems 15 derart an, dass sich ein Druck im dem ersten Hydrauliksystem 15 einstellt, der gleich dem Druck im zweiten Hydrauliksystem 16 ist. Wenn der Lüfter 20 zu diesem Zeitpunkt bereits mit maximaler Drehzahl betrieben wird, ist ein Eingriff in die Lüftersteuerung nicht erforderlich, was allerdings eine entsprechende Dimensionierung der beiden Hydraulikpumpen 17, 21 voraussetzt. Es ist aber auch möglich, dass die Steuereinheit 14 das Druckregelventil 17A der Hydraulikpumpe 17 des ersten Hydrauliksystems 15 derart ansteuert, dass sich ein Druck im dem ersten Hydrauliksystem 15 einstellt, der größer als der Druck im zweiten Hydrauliksystem 16 ist. Dies führt dann zu einer Druckerhöhung im zweiten Hydrauliksystem 16.

Es sei angenommen, dass die Hydraulikpumpen 17, 21 des ersten und zweiten Hydrauliksystems 15, 16 Hydraulikflüssigkeit mit einem Volumenstrom von 200 l/min fördern. Aufgrund der Druckdifferenz wird die Steuereinrichtung 26 in dem ersten Hydrauliksystem 15 derart angesteuert, dass die Hydraulikflüssigkeit zumindest teilweise in das zweite Hydrauliksystem 16 umgeleitet wird, wodurch die Verfahrgeschwindigkeit der Kolben-/Zylinder-Anordnungen 23A, 23B, 23C, 23D vergrößert wird. Während der Hydraulikmotor 19 des Lüfters 20 beispielsweise noch mit 100 l/min betrieben wird, strömen 100 l/min Hydraulikflüssigkeit über die Verbindungsleitung 34 in das zweite Hydrauliksystem16, so dass den Kolben-/Zylinder-Anordnungen 23A, 23B, 23C, 23D der Hubeinrichtungen 12A, 12B, 13A, 13B insgesamt 300 l/min zur Verfügung stehen.

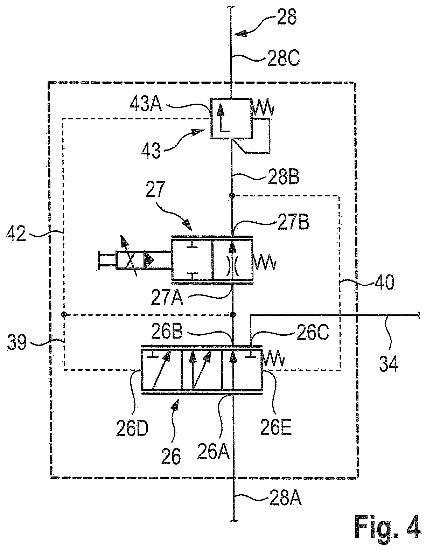

Fig. 4 zeigt ein zweites Ausführungsbeispiel, das sich von der unter Bezugnahme auf Figur 3 beschriebenen Ausführungsform nur durch eine zusätzliche Druckwaage 43 unterscheidet. In Fig. 4 ist nur der Teil der Hydraulik dargestellt, durch den sich beide Ausführungsbeispiele voneinander unterscheiden. Die einander entsprechenden Teile sind mit den gleichen Bezugszeichen versehen. Die Druckwaage 43 ist in dem dritten Leitungsabschnitt 28C der Druckleitung 28 stromab des Steuerelements 27 und stromauf des Hydraulikmotors 19 angeordnet. Der Steueranschluss 43A der Druckwaage 43 ist über eine dritte Steuerleitung 42 mit der ersten Steuerleitung 39 verbunden. Mit der Druckwaage 43 kann eine lastdruckunabhängige Volumenstromregelung erzielt werden. In dem konkreten Anwendungsfall ist eine derartige Druckwaage aber nicht erforderlich, da eine lastdruckunabhängige Volumenstromregelung bei einem Lüfterbetrieb in der Praxis keine Vorteile bietet.

## Patentansprüche

1. Baumaschine, insbesondere Straßenfräsmaschine, Stabilisierer, Recycler oder Surface-Miner, mit
einem von einem Fahrwerk (1) getragenen Maschinenrahmen (2),
einer Mehrzahl von Hydrauliksystemen (15, 16), die jeweils mindestens eine hydraulische Komponente (18, 22), mindestens eine Hydraulikpumpe (17, 21) zum Fördern von Hydraulikflüssigkeit für die mindestens eine hydraulische Komponente und mindestens eine Hydraulikleitung (28, 31) zum Transport der Hydraulikflüssigkeit von der mindestens einen Hydraulikpumpe (17, 21) zu der mindestens einen hydraulischen Komponente (18, 22) aufweisen, und
mindestens einem Verbrennungsmotor (24) und einer Kraftübertragungseinrichtung (44) zur Übertragung mindestens eines Teils der Antriebsleistung von dem mindestens einen Verbrennungsmotor (24) auf die Hydraulikpumpen (17, 21),
wobei
die hydraulische Komponente (18) des ersten Hydrauliksystems (15) ein Hydraulikmotor (19) ist und die hydraulische Komponente (22) des zweiten Hydrauliksystems (16) eine Kolben-/Zylinder-Anordnung (23A, 23B, 23C, 23D) ist,
die Baumaschine ein Kühlsystem mit einem Kühler und einem Lüfter (19) aufweist, der von einem Hydraulikmotor antreibbar ist, wobei der Hydraulikmotor (19) des ersten Hydrauliksystems (15) der Hydraulikmotor zum Antrieb des Lüfters (20) ist,
das Fahrwerk (1) der Baumaschine Laufwerke (10A, 10B, 11A, 11B) aufweist, denen Hubeinrichtungen (12A, 12B, 13A, 13B) zur Höhenverstellung des Maschinenrahmens (2) zugeordnet sind, die von Kolben-/Zylinder-Anordnungen betätigbar sind, wobei die Kolben-/Zylinder-Anordnungen (23A, 23B, 23C, 23D) des zweiten Hydrauliksystems (16) die Kolben-/Zylinder-Anordnungen zur Betätigung der Hubeinrichtungen (12A, 12B, 13A, 13B) sind,
**dadurch gekennzeichnet, dass**
eine dem ersten und zweiten Hydrauliksystem (15, 16) der Mehrzahl von Hydrauliksystemen zugeordnete hydraulische Steuereinrichtung (26) vorgesehen ist, die derart ausgebildet ist, dass zumindest ein Teil der von der mindestens einen Hydraulikpumpe (17) des ersten Hydrauliksystems (15) geförderten Hydraulikflüssigkeit dem zweiten Hydrauliksystem (16) zuführbar ist, so dass die mindestens eine hydraulische Komponente (22) des zweiten Hydrauliksystems (16) mit zumindest einem Teil der von der mindestens einen Hydraulikpumpe (17) des ersten Hydrauliksystems (15) geförderten Hydraulikflüssigkeit und der von der mindestens einen Hydraulikpumpe (21) des zweiten Hydrauliksystems (16) geförderten Hydraulikflüssigkeit betrieben wird,
ein hydraulisches Steuerelement (27) zur Steuerung des Volumenstroms der zu der mindestens einen hydraulischen Komponente (18) des ersten Hydrauliksystems (15) strömenden Hydraulikflüssigkeit oder Unterbrechung der Flüssigkeitsströmung vorgesehen ist, wobei das hydraulische Steuerelement (27) derart mit der hydraulischen Steuereinrichtung (26) zusammenwirkt, dass bei einer Verringerung des Volumenstroms der Hydraulikflüssigkeit, die der mindestens einen hydraulischen Komponente (18) des ersten Hydrauliksystems (15) zugeführt wird, oder einer Unterbrechung der Flüssigkeitsströmung die hydraulische Steuereinrichtung (26) derart angesteuert wird, dass das Volumen an Hydraulikflüssigkeit, die der mindestens einen hydraulischen Komponente (18) des ersten Hydrauliksystems (15) nicht zugeführt wird, der hydraulischen Komponente (22) des zweiten Hydrauliksystems (16) zugeführt wird,
das erste Hydrauliksystem (15) eine Hydraulikpumpe (17) umfasst, die einen Sauganschluss (27A) und einen Druckanschluss (27B) aufweist, wobei an den Sauganschluss (27A) eine zu einem Tank (25) führende Saugleitung (24) angeschlossen ist und an den Druckanschluss (27B) eine zu einem Einlass (26A) der hydraulischen Steuereinrichtung (26) führende Druckleitung (28) angeschlossen ist, und die hydraulische Steuereinrichtung (26) einen ersten Auslass (26B) und einen zweiten Auslass (26C) aufweist, wobei an den ersten Auslass (26B) eine zu der mindestens einen hydraulischen Komponente (18) des ersten Hydrauliksystems (15) führende Druckleitung (28) angeschlossen ist, in die das hydraulische Steuerelement (27) geschaltet ist, und an den zweiten Auslass (26C) eine zu dem zweiten Hydrauliksystem (16) führende Verbindungsleitung (34) angeschlossen ist, und
die hydraulische Steuereinrichtung (16) als ein mit Hydraulikflüssigkeit steuerbares Proportionalwegeventil ausgebildet ist, das einen ersten Steueranschluss (26D) und einen zweiten Steueranschluss (26E) hat, wobei an den ersten Steueranschluss (26D) eine erste Steuerleitung (39) angeschlossen ist, die an der zu der mindestens einen hydraulischen Komponente (18) des ersten Hydrauliksystems (15) führenden Druckleitung (28) stromab der hydraulischen Steuereinrichtung (26) und stromauf des hydraulischen Steuerelements (27) angeschlossen ist, und an den zweiten Steueranschluss (26E) eine zweite Steuerleitung (40) angeschlossen ist, die an der zu der mindestens einen hydraulischen Komponente (18) des ersten Hydrauliksystems (16) führenden Druckleitung (28) stromab des hydraulischen Steuerelements (27) angeschlossen ist.

2. Baumaschine nach Anspruch 1, **dadurch gekennzeichnet, dass** in der zu dem zweiten Hydrauliksystem (16) führenden Verbindungsleitung (34) ein Rückschlagventil (35) angeordnet ist.

3. Baumaschine nach Anspruch 1 oder 2, **dadurch gekennzeichnet, dass** das hydraulische Steuerelement (27) als ein elektromagnetisch gesteuertes Proportionalventil oder ein elektromagnetisch gesteuertes Absperrventil ausgebildet ist.

4. Baumaschine nach einem der Ansprüche 1 bis 3, **dadurch gekennzeichnet, dass** die Baumaschine eine Steuereinheit (14) aufweist, die zur Ansteuerung des hydraulischen Steuerelements (27) konfiguriert ist, wobei die Steuereinheit (14) einen Boost-Betriebsmodus für die Baumaschine vorsieht, in dem das Steuerelement (26) derart angesteuert wird, dass der Volumenstrom der zu der mindestens einen hydraulischen Komponente (18) des ersten Hydrauliksystems (15) strömenden Hydraulikflüssigkeit verringert oder die Flüssigkeitsströmung unterbrochen wird.

5. Baumaschine nach Anspruch 4, **dadurch gekennzeichnet, dass** die Steuereinheit(14) derart konfiguriert ist, dass in den Boost-Betriebsmodus automatisch geschaltet wird, wenn die mindestens eine hydraulische Komponente (22) des zweiten Hydrauliksystems (16) betrieben wird oder
dass ein Bedienelement (9) zum Einschalten des Boost-Betriebsmodus vorgesehen ist, wobei die Steuereinheit (14) derart konfiguriert ist, dass in den Boost-Betriebsmodus geschaltet wird, wenn das Bedienelement (9) betätigt wird.

## Claims

1. Construction machine, in particular road milling machine, stabiliser, recycler or surface miner, having
a machine frame (2) supported by a chassis (1),
a plurality of hydraulic systems (15, 16), each of which has at least one hydraulic component (18, 22), at least one hydraulic pump (17, 21) for conveying hydraulic fluid for the at least one hydraulic component, and at least one hydraulic line (28, 31) for transporting the hydraulic fluid from the at least one hydraulic pump (17, 21) to the at least one hydraulic component (18, 22), and
at least one internal combustion engine (24) and a power transmission device (44) for transferring at least part of the drive power from the at least one internal combustion engine (24) to the hydraulic pumps (17, 21),
wherein
the hydraulic component (18) of the first hydraulic system (15) is a hydraulic motor (19) and the hydraulic component (22) of the second hydraulic system (16) is a piston arrangement/cylinder arrangement (23A, 23B, 23C, 23D),
the construction machine comprises a cooling system having a cooler and a fan (19) which can be driven by a hydraulic motor, the hydraulic motor (19) of the first hydraulic system (15) being the hydraulic motor for driving the fan (20),
the chassis (1) of the construction machine has running gears (10A, 10B, 11A, 11B) to which lifting devices (12A, 12B, 13A, 13B) for the height adjustment of the machine frame (2) are assigned, said lifting devices being actuatable by piston arrangements/cylinder arrangements, wherein the piston arrangements/cylinder arrangements (23A, 23B, 23C, 23D) of the second hydraulic system (16) are the piston arrangements/cylinder arrangements for actuating the lifting devices (12A, 12B, 13A, 13B),
**characterized in that**
a hydraulic control device (26) assigned to the first and the second hydraulic system (15, 16) of the plurality of hydraulic systems is provided, said control device being designed such that at least part of the hydraulic fluid delivered by the at least one hydraulic pump (17) of the first hydraulic system (15) can be supplied to the second hydraulic system (16), such that the at least one hydraulic component (22) of the second hydraulic system (16) is operated with at least a part of the hydraulic fluid fed by the at least one hydraulic pump (17) of the first hydraulic system (15) and the hydraulic fluid fed by the at least one hydraulic pump (21) of the second hydraulic system (16),
a hydraulic control element (27) is provided for controlling the volume flow of the hydraulic fluid flowing to the at least one hydraulic component (18) of the first hydraulic system (15) or for interrupting the fluid flow, wherein the hydraulic control element (27) interacts with the hydraulic control device (26) in such a way that when the volume flow of the hydraulic fluid which is supplied to the at least one hydraulic component (18) of the first hydraulic system (15) is reduced or the fluid flow is interrupted, the hydraulic control device (26) is actuated in such a way that the volume of hydraulic fluid, which is not supplied to the at least one hydraulic component (18) of the first hydraulic system (15), is supplied to the hydraulic component (22) of the second hydraulic system (16),
the first hydraulic system (15) comprises a hydraulic pump (17) which has a suction connection (27A) and a pressure connection (27B), wherein a suction line (24) leading to a tank (25) is connected to the suction connection (27A) and a pressure line (28) leading to an inlet (26A) of the hydraulic control device (26) is connected to the pressure connection (27B), and the hydraulic control device (26) has a first outlet (26B) and a second outlet (26C), wherein a pressure line (28) leading to the at least one hydraulic component (18) of the first hydraulic system (15) is connected to the first outlet (26B), in which pressure line the hydraulic control element (27) is switched, and wherein a connecting line (34) is connected to the second outlet (26C) leading to the second hydraulic system (16), and
the hydraulic control device (16) is designed as a proportional directional valve which can be controlled with hydraulic fluid and which has a first control connection (26D) and a second control connection (26E), wherein a first control line (39) is connected to the first control connection (26D), said first control line being connected to the pressure line (28) leading to the at least one hydraulic component (18) of the first hydraulic system (15) downstream of the hydraulic control device (26) and upstream of the hydraulic control element (27), and wherein a second control line (40) is connected to the second control connection (26E), said second control line being connected to the pressure line (28) leading to the at least one hydraulic component (18) of the first hydraulic system (16) downstream of the hydraulic control element (27).

2. Construction machine according to claim 1, **characterised in that** a check valve (35) is arranged in the connecting line (34) leading to the second hydraulic system (16).

3. Construction machine according to claim 1 or 2, **characterised in that** the hydraulic control element (27) is designed as an electromagnetically controlled proportional valve or an electromagnetically controlled shut-off valve.

4. Construction machine according to any of claims 1 to 3, **characterised in that** the construction machine has a control unit (14) which is configured to actuate the hydraulic control element (27), wherein the control unit (14) provides a boost operating mode for the construction machine, where the control element (26) is actuated such that the volume flow of the hydraulic fluid flowing to the at least one hydraulic component (18) of the first hydraulic system (15) is reduced or the fluid flow is interrupted.

5. Construction machine according to claim 4, **characterised in that** the control unit (14) is configured such that the boost operating mode is automatically switched on when the at least one hydraulic component (22) of the second hydraulic system (16) is operated, or
that an operating element (9) is provided for switching on the boost operating mode, wherein the control unit (14) is configured such that the boost operating mode is switched on when the operating element (9) is actuated.

## Revendications

1. Engin de chantier, en particulier fraiseuse routière, stabilisateur, recycleur ou Surface Miner, comprenant
un châssis d'engin (2) porté par un train de roulement (1),
une pluralité de systèmes hydrauliques (15, 16) comprenant chacun au moins un composant hydraulique (18, 22), au moins une pompe hydraulique (17, 21) pour refouler le fluide hydraulique vers ledit au moins un composant hydraulique, et au moins une conduite hydraulique (28, 31) pour transporter le fluide hydraulique de ladite au moins une pompe hydraulique (17, 21) vers ledit au moins un composant hydraulique (18, 22), et
au moins un moteur à combustion interne (24) et un dispositif de transmission de puissance (44) pour transmettre au moins une partie de la puissance d'entraînement dudit au moins un moteur à combustion interne (24) aux pompes hydrauliques (17, 21),
dans lequel
le composant hydraulique (18) du premier système hydraulique (15) est un moteur hydraulique (19), et le composant hydraulique (22) du deuxième système hydraulique (16) est un ensemble à piston/cylindre (23A, 23B, 23C, 23D),
l'engin de chantier comprend un système de refroidissement muni d'un radiateur et d'un ventilateur (20) susceptible d'être entraîné par un moteur hydraulique, le moteur hydraulique (19) du premier système hydraulique (15) étant le moteur hydraulique destiné à entraîner le ventilateur (20),
le train de roulement (1) de l'engin de chantier comprend des trains chenillés (10A, 10B, 11A, 11B) auxquels sont associés des dispositifs de levage (12A, 12B, 13A, 13B) destinés au réglage en hauteur du châssis (2) de l'engin et susceptibles d'être actionnés par des ensembles à piston/cylindre, les ensembles à piston/cylindre (23A, 23B, 23C, 23D) du deuxième système hydraulique (16) étant les ensembles à piston/cylindre destinés à actionner les dispositifs de levage (12A, 12B, 13A, 13B),
**caractérisé en ce que**
il est prévu un dispositif de commande hydraulique (26) associé aux premier et deuxième systèmes hydrauliques (15, 16) de la pluralité de systèmes hydrauliques, qui est conçu de telle sorte qu'au moins une partie du fluide hydraulique refoulé par ladite au moins une pompe hydraulique (17) du premier système hydraulique (15) puisse être amenée au deuxième système hydraulique (16), de sorte que ledit au moins un composant hydraulique (22) du deuxième système hydraulique (16) fonctionne avec au moins une partie du fluide hydraulique, refoulé par ladite au moins une pompe hydraulique (17) du premier système hydraulique (15), et une partie du fluide hydraulique refoulé par ladite au moins une pompe hydraulique (21) du deuxième système hydraulique (16),
il est prévu un élément de commande hydraulique (27) destiné à commander le débit volumique du fluide hydraulique, s'écoulant vers ledit au moins un composant hydraulique (18) du premier système hydraulique (15), ou à interrompre l'écoulement du fluide, l'élément de commande hydraulique (27) coopérant avec le dispositif de commande hydraulique (26) de telle sorte de telle sorte que, en cas de réduction du débit volumique du fluide hydraulique amené audit au moins un composant hydraulique (18) du premier système hydraulique (15), ou en cas d'interruption de l'écoulement du fluide, le dispositif de commande hydraulique (26) est commandé de telle sorte que le volume de fluide hydraulique qui n'est pas amené audit au moins un composant hydraulique (18) du premier système hydraulique (15) est amené au composant hydraulique (22) du deuxième système hydraulique (16),
le premier système hydraulique (15) comprend une pompe hydraulique (17) qui présente un raccord d'aspiration (27A) et un raccord de refoulement (27B), une conduite d'aspiration (24) menant à un réservoir (25) étant raccordée au raccord d'aspiration (27A), et une conduite de refoulement (28) menant à une entrée (26A) du dispositif de commande hydraulique (26) étant raccordée au raccord de refoulement (27B), et le dispositif de commande hydraulique (26) présente une première sortie (26B) et une deuxième sortie (26C), une conduite de refoulement (28) menant audit au moins un composant hydraulique (18) du premier système hydraulique (15) étant raccordée à la première sortie (26B), conduite dans laquelle est monté l'élément de commande hydraulique (27), et une conduite de communication (26C) menant au deuxième système hydraulique (16) étant raccordée à la deuxième sortie (26C),
et
le dispositif de commande hydraulique (16) est conçu comme une vanne proportionnelle qui peut être commandée par un fluide hydraulique et qui présente un premier raccord de commande (26D) et un deuxième raccord de commande (26E), une première conduite de commande (39) étant raccordée au premier raccord de commande (26D), laquelle est raccordée à la conduite de refoulement (28) menant audit au moins un composant hydraulique (18) du premier système hydraulique (15) en aval du dispositif de commande hydraulique (26) et en amont de l'élément de commande hydraulique (27), et une deuxième conduite de commande (40) étant raccordée au deuxième raccord de commande (26E), laquelle est raccordée à la conduite de refoulement (28) menant audit au moins un composant hydraulique (18) du premier système hydraulique (16) en aval de l'élément de commande hydraulique (27).

2. Engin de chantier selon la revendication 1,
**caractérisé en ce qu'**un clapet anti-retour (35) est disposé dans la conduite de communication (34) menant au deuxième système hydraulique (16).

3. Engin de chantier selon la revendication 1 ou 2,
**caractérisé en ce que** l'élément de commande hydraulique (27) est conçu comme une vanne proportionnelle à commande électromagnétique ou comme une vanne d'arrêt à commande électromagnétique.

4. Engin de chantier selon l'une des revendications 1 à 3,
**caractérisé en ce que** l'engin de chantier comporte une unité de commande (14) configurée pour commander l'élément de commande hydraulique (27), l'unité de commande (14) assurant un mode de fonctionnement boost pour l'engin de chantier, dans lequel l'élément de commande (26) est commandé de telle sorte que le débit volumique du fluide hydraulique s'écoulant vers ledit au moins un composant hydraulique (18) du premier système hydraulique (15) est réduit ou que l'écoulement du fluide est interrompu.

5. Engin de chantier selon la revendication 4,
**caractérisé en ce que** l'unité de commande (14) est configurée de telle sorte que le mode de fonctionnement boost est automatiquement activé lorsque ledit au moins un composant hydraulique (22) du deuxième système hydraulique (16) est en fonctionnement, ou
**en ce qu'**il est prévu un élément de manœuvre (9) pour activer le mode de fonctionnement boost, l'unité de commande (14) étant configurée de telle sorte que le mode de fonctionnement boost est activé lorsque l'élément de manœuvre (9) est actionné.
